# EUROPEAN PATENT SPECIFICATION

(11) **EP 4 480 309 B1**
(45) Date of publication and mention of the grant of the patent: **17.12.2025**
(21) Application number: 24152419.8
(22) Date of filing: 17.01.2024
(51) Int. Cl.: A01M 1/20, A01M 29/12, A01N 25/34, A01N 25/08, A01P 17/00, A01N 53/00, A01N 25/18

(54) **MOSQUITO REPELLING FAN**
MÜCKENABWEHRLÜFTER
VENTILATEUR RÉPULSIF ANTI-MOUSTIQUES

(30) Priority: 20.06.2023 CN 202310740737
(43) Date of publication of application: 25.12.2024
(73) Proprietor: Li, Wenjie, Guangzhou Guangdong (CN)
(72) Inventor: LI, Wenjie, Guangzhou (CN)
(74) Representative: Zaboliene, Reda

(56) References cited:
- CN-A- 1 897 809
- CN-A- 102 077 820
- JP-B2- 4 863 421
- KR-A- 20030 070 023
- US-A1- 2015 128 877
- US-A1- 2016 256 588

## Description

### TECHNICAL FIELD

The application relates to the technical field of mosquito repelling devices, and in particular to a mosquito repelling fan.

### BACKGROUND

Common mosquito repelling methods using a chemical repellent in daily life include applying the mosquito repellent directly to skin and using a spray head to produce a spray. For use of the mosquito repellent in the form of spray or apply, in order to achieve a better diffusion effect, volatile agents such as alcohol and glycerol need to be added into the repellent to promote volatilization and diffusion effects, but sticky discomfort may be generated on the skin, and potential safety hazards may also be caused to people with sensitive skin. Relevant prior art in the field are for example the following documents: JP4863421B2, CN102077820A, KR20030070023A, US2015128877A1.

### SUMMARY

The application provides a mosquito repelling fan, for solving the problems that in the relevant art, for use of the mosquito repellent in the form of spray or apply, sticky discomfort may be generated on the skin, and potential safety hazards may also be caused to people with sensitive skin.

In order to realize the purpose, the technical solution adopted by the application is as follows.

A mosquito repelling fan is used in cooperation with a tablet, and includes a shell and a fan assembly installed in the shell, the fan assembly blows air in a direction out of the shell, an installation plate is disposed behind the fan assembly, an installation space is formed between the installation plate and the fan assembly, and the tablet is detachably and replaceably installed in the installation space.

The tablet is prepared by soaking a flaky base material in a repellent, and the repellent includes Picaridin.

A hollow-out area is disposed at a position, corresponding to an air outlet of the fan assembly, on the shell.

Furthermore, an installation groove is formed in the shell, the installation groove communicates with the installation space, and the tablet is inserted into the installation space from the installation groove.

Furthermore, the fan assembly includes fan blades, a motor, a bearing and a fan blade support, the motor is installed at the top of the fan blade support, a connecting rod is disposed at the rear end of the fan blade, which is connected with the motor through the connecting rod and driven by the motor, and the bearing sleeves outside the connecting rod.

Furthermore, the mosquito repelling fan further includes a control module, the control module includes a circuit board, an indicator light and a key, and the control module is electrically connected with the fan assembly.

Furthermore, the indicator light and the key are disposed on the circuit board and face the air outlet side of the mosquito repelling fan.

The control module further includes a keycap installed on the surface of the key, and the keycap and the indicator light penetrate out of the surface of the shell.

A power supply interface is further disposed at the end part of one side of the circuit board, and a power supply opening is formed in the position, corresponding to the power supply interface, of the shell and configured for connecting an external wire to the power supply opening.

The type of the power supply interface is any one of USB interfaces of Type-A, Mini-B, Micro-B and Type-C.

Furthermore, the installation plate has a heating function, and the temperature of the electric heating plate is regulated and controlled by the control module.

The speed of air generated by the fan assembly is regulated and controlled by the control module.

Furthermore, the mosquito repelling fan further includes a power supply element disposed in the shell, and the power supply element is located on the side, deviating from the fan assembly, of the installation plate.

The power supply element is electrically connected with the fan assembly and the control module, and a partition plate is lined between the power supply element and the installation plate.

Furthermore, the temperature of the installation plate has a plurality of gears, and a plurality of indicator lights are available, which respectively indicate each temperature gear of the installation plate and a switch of the mosquito repelling fan.

Furthermore, the work temperature of the installation plate is greater than 40 °C and less than 120 °C.

Furthermore, the repellent further includes one or more of BAAPE(ethyl butylacetylaminopropionate ) , methyl nonyl ketone and DEET ( N,N-Diethyl-3-methylbenzamide) .

The application has the following beneficial effects.

Firstly, the mosquito repelling fan of the application is low in work temperature, so that the energy consumption is low, and an energy supply element with large volume and large mass does not need to be configured, so that the whole mosquito repelling fan is miniaturized.

Secondly, the mosquito repelling fan of the application uses the tablet soaked with Picaridin with good volatilization as a consumption medicine, which has no requirement on the specific placing angle of the mosquito repelling fan, so that the degree of freedom is higher during use of a user.

Lastly, there is no need to spray or apply the medicine to the skin, so that the use is safer.

### BRIEF DESCRIPTION OF THE DRAWINGS

Fig. 1 is a schematic diagram of an exploded view of a mosquito repelling fan.
Fig. 2 is a schematic diagram of a cross-sectional view of a mosquito repelling fan.

### DETAILED DESCRIPTION OF THE EMBODIMENTS

In order to make the purpose, the technical solutions and the advantages of the application clearer, the technical solutions of the application will be clearly and completely described below in combination with the embodiments of the application. It is to be noted that the described embodiments are only a part but not all of the embodiments of the application. All other embodiments obtained by those of ordinary skill in the art based on the embodiments of the application without creative efforts shall fall within the protection scope of the application.

It is to be noted that if the embodiments of the application contain directional indications (such as up, down, left, right, front, back, top, bottom, inside, outside, vertical, transverse, longitudinal, counterclockwise, clockwise, circumferential, radial, axial...), the directional indications are only used to explain the relative position relationship and motion between the components under a specific attitude (as shown in the attached figures). If the specific attitude changes, the directional indication will change accordingly.

In the embodiments of the application, the term "and/or" is only an association relationship for describing an associated object, and indicates that three relationships may exist, for example, A and/or B, and may indicate: A exists alone, A and B exist simultaneously, and B exists alone.

In the embodiments of the application, terms "first" and "second" are only adopted for description and should not be understood to indicate or imply relative importance or implicitly indicate the number of indicated technical features. Therefore, a feature defined by "first" and "second" may explicitly or implicitly indicate inclusion of at least one such feature. In description of the application, the terms "comprising", "having" and any variations thereof are intended to cover a non-exclusive inclusion. For example, systems, products or devices including a series of components or units are not limited to listed components or units, but further alternatively include components or units not listed, or alternatively include other components or units inherent to such products or devices. In the description of the application, "plurality" means two or more, for example, two, three and the like, unless otherwise limited definitely and specifically.

"Embodiment" mentioned herein means that specific features, structures or characteristics described in conjunction with the embodiments are included in at least one embodiment of the application. The appearances of the term in various places in the specification are not necessarily all referring to the same embodiment, nor are separate or alternative embodiments mutually exclusive of other embodiments. It is explicitly and implicitly understood by the skilled in the art that the embodiments described herein may be combined with other embodiments.

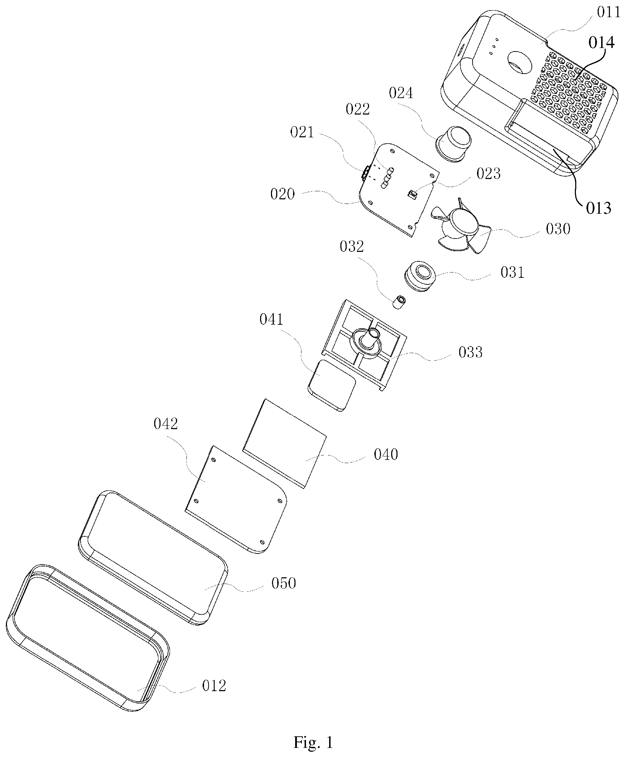

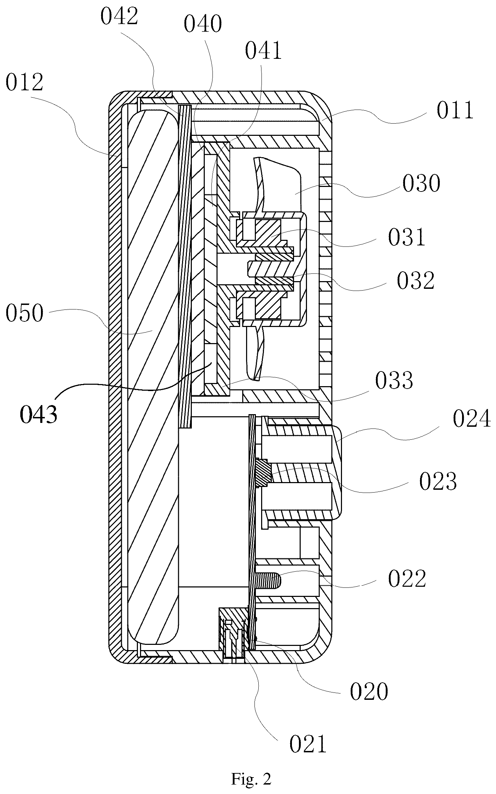

As shown in Figs. 1 and 2, the application provides a mosquito repelling fan, which mainly includes a shell and a fan assembly and a control module installed in the shell, the fan assembly is installed in the shell, an installation plate 040 is disposed behind the fan assembly in the mosquito repelling fan for replaceably and detachably installing a tablet 041, and a power supply element 050 is further disposed in the mosquito repelling fan for supplying power for the control module and the fan assembly.

Specifically, the shell includes a top shell 011 and a bottom shell 012, and the top shell 011 and the bottom shell 012 are connected up and down for covering the fan assembly, the control module, the installation plate 040 and the power supply element 050 inside; the fan assembly provides air to the outside of the shell, an area, corresponding to the fan assembly, on the top shell 011 is a hollow-out area 014, to facilitate air out of the fan assembly, and air flow from the installation space 043 to the hollow-out area 014 is generated when the fan assembly works, in order to convey a repellent volatilizing from the installation space 043 out from the hollow-out area 014 along with air flow; the fan assembly specifically includes fan blades 030, a motor 031, a bearing 032 and a fan blade support 033, the motor 031 is installed at the top of the fan blade support 033, a connecting rod is disposed at the rear end of the fan blade 030, which is connected with the motor 031 through the connecting rod and driven by the motor, and the bearing 032 sleeves outside the connecting rod; the power supply element 050 is located on the side, close to the bottom shell 012, in the shell, and electrically connected with the control module and the fan assembly, in the application, a partition plate 042 is disposed between the power supply element 050 and the fan assembly, the installation plate 040 is fixedly installed on the side, close to the fan assembly, on the partition plate 042, and an installation space 043 is reserved between the installation plate and the fan blade support 033 in the fan assembly for installing a tablet 041. In a specific embodiment of the application, an installation groove 013 communicating with the installation space 043 is formed in the side part of the shell, and the tablet 041 is inserted in the installation space 043 through the installation groove 013.

The control module is disposed on one side of the fan assembly, and includes a circuit board 020, an indicator light 022 and a key 023, the indicator light 022 and the key 023 are installed on the side, close to the top shell 011, of the circuit board 020, in addition, a keycap 024 is further disposed on the key 023, openings are correspondingly formed in the top shell 011, so that both the key cap 024 and the indicator light 022 penetrate out of the surface of the top shell 011 to be exposed outside, a user manually presses the keycap 024 to trigger the key 023, and the work condition of the mosquito repelling fan is displayed through the indicator light 022; a power supply interface 021 is disposed on the side, far away from the fan assembly, the circuit board 020, the specific type of the power supply interface 021 is any one of USB interfaces of Type-A, Mini-B, Micro-B and Type-C, and a power supply opening is formed in the position, corresponding to the power supply interface 021, of the shell and configured for exposing the power supply interface 021 for connecting an external wire.

The tablet 041 of the application is prepared by soaking a flaky base material in a repellent, the repellent may use liquid medicines at room temperature, such as Picaridin, BAAPE(ethyl butylacetylaminopropionate), methyl nonyl ketone and DEET (N,N-Diethyl-3-methylbenzamide) , in the normal use state of the tablet 041, the repellent may volatilize naturally, and the fan assembly diffuses the volatilizing repellent to environment.

In other embodiments of the application, the installation plate 040 also has the function of an electric heating plate, its temperature is controlled by the control module, meanwhile, the partition plate 042 also plays a role of separating the installation plate 040 from the power supply element 050 to reduce influence of high temperature on the power supply element 050. In the application, Picaridin is used as the repellent, the work temperature of the installation plate 040 is set to be greater than 40 °C and less than 120 °C, furthermore, a plurality of temperature gears may be set in the interval, the key 023 is used for operating the startup and temperature gear adjustment of the mosquito repelling fan, and rotation speed of the fan (for example, it may be set that the key 023 is pressed for a long time for realizing startup and stop of the mosquito repelling fan, and pressed for a short time for switching temperature gear, a plurality of indicator lights 022 may be set for further indicating the temperature gear, and the rotation speed of the fan is controlled by rotating the key 023), the minimum value 40 °C of the interval is the diffusion temperature higher than the normal body temperature, and the maximum value 120 °C of the interval is the upper limit temperature of the designed maximum reasonable diffusion rate of Picaridin.

The mosquito repelling fan of the application is low in work temperature, so that the energy consumption is low, and an energy supply element with large volume and large mass does not need to be configured, so that the whole mosquito repelling fan is miniaturized, in addition, it has not requirement on specific placing angle, so that the degree of freedom during use of the user is higher.

## Claims

1. A repelling system, comprising a mosquito repelling fan and a tablet, the repelling system further comprising a shell and a fan assembly, wherein
the fan assembly is installed in the shell, an installation plate is disposed behind the fan assembly, an installation space is formed between the installation plate and the fan assembly, and the tablet is detachably installed in the installation space;
the tablet consists of a flaky base material soaked with a repellent, wherein the repellent comprises Picaridin;
a mesh area is disposed at a position, corresponding to an air outlet direction of the fan assembly, on the shell, and air flow from the installation space to the mesh area is generated when the fan assembly turned on, in order to convey a repellent volatilizing from the installation space out from the mesh-out area along with the air flow;
wherein the mosquito repelling fan further comprises a control module, the control module comprises a circuit board, an indicator light and a key, and the control module is electrically connected with the fan assembly;
wherein the installation plate has a heating function, and a temperature of the electric heating plate is regulated and controlled by the control module;
a speed of air generated by the fan assembly is regulated and controlled by the control module;
wherein the mosquito repelling fan further comprises a power supply element disposed in the shell, and the power supply element is located on the side, deviating from the fan assembly, of the installation plate;
the power supply element is electrically connected with the fan assembly and the control module, and a partition plate is lined between the power supply element and the installation plate.

2. The mosquito repelling fan according to claim 1, wherein an installation groove is formed in the shell, the installation groove communicates with the installation space, and the tablet is inserted into the installation space from the installation groove.

3. The mosquito repelling fan according to claim 1, wherein the fan assembly comprises fan blades, a motor, a bearing and a fan blade support, the motor is installed at a top of the fan blade support, a connecting rod is disposed at the rear end of the fan blade, which is connected with the motor through the connecting rod, the motor drives the connecting rod, and the bearing sleeves outside the connecting rod.

4. The mosquito repelling fan according to claim 1, wherein the indicator light and the key are disposed on the circuit board, and the indicator light and the key are disposed facing the air outlet side of the mosquito repelling fan;
the control module further comprises a keycap installed on a surface of the key, and the keycap and the indicator light penetrate out of a surface of the shell;
a power supply interface is further disposed at an end part of one side of the circuit board, and a power supply opening is formed in the position, corresponding to the power supply interface, of the shell and configured for connecting an external wire to the power supply opening;
a type of the power supply opening is any one of USB interfaces of Type-A, Mini-B, Micro-B and Type-C.

5. The mosquito repelling fan according to claim 1, wherein a temperature of the installation plate has a plurality of gears, and a plurality of indicator lights are available, which respectively instructs each temperature gear of the installation plate and a switch of the mosquito repelling fan.

6. The mosquito repelling fan according to claim 5, wherein the work temperature of the installation plate is greater than 40 °C and less than 120 °C.

7. The mosquito repelling fan according to claim 1, wherein the repellent further comprises one or more of BAAPE(ethyl butylacetylaminopropionate) , methyl nonyl ketone and DEET (N,N-Diethyl-3-methylbenzamide) .

## Patentansprüche

1. Abwehrsystem, umfassend einen Mückenabwehrventilator und eine Tablette, wobei das Abwehrsystem ferner ein Gehäuse und eine Ventilatorbaugruppe umfasst, wobei
die Ventilatorbaugruppe in dem Gehäuse installiert ist, eine Installationsplatte hinter der Ventilatorbaugruppe angeordnet ist, ein Installationsraum zwischen der Installationsplatte und der Ventilatorbaugruppe ausgebildet ist und die Tablette abnehmbar in dem Installationsraum installiert ist;
die Tablette aus einem flachen Basismaterial besteht, das mit einem Abwehrmittel getränkt ist, wobei das Abwehrmittel Picaridin umfasst;
ein Mesh-Bereich an einer Stelle auf dem Gehäuse angeordnet ist, die einer Luftauslassrichtung der Ventilatorbaugruppe entspricht, und ein Luftstrom von dem Installationsraum zu dem Mesh-Bereich erzeugt wird, wenn die Ventilatorbaugruppe eingeschaltet ist, um ein aus dem Installationsraum verdunstendes Abwehrmittel zusammen mit dem Luftstrom aus dem Mesh-Bereich hinaus zu befördern;
wobei der Mückenabwehrventilator ferner ein Steuermodul umfasst, das Steuermodul eine Leiterplatte, eine Anzeigeleuchte und eine Taste umfasst und das Steuermodul elektrisch mit der Ventilatorbaugruppe verbunden ist;
wobei die Installationsplatte eine Heizfunktion aufweist und eine Temperatur der elektrischen Heizplatte durch das Steuermodul geregelt und gesteuert wird;
eine Geschwindigkeit der durch die Ventilatorbaugruppe erzeugten Luft durch das Steuermodul geregelt und gesteuert wird;
wobei der Mückenabwehrventilator ferner ein Stromversorgungselement umfasst, das in dem Gehäuse angeordnet ist, und das Stromversorgungselement auf der Seite der Installationsplatte angeordnet ist, die von der Ventilatorbaugruppe abgewandt ist;
das Stromversorgungselement elektrisch mit der Ventilatorbaugruppe und dem Steuermodul verbunden ist und eine Trennplatte zwischen dem Stromversorgungselement und der Installationsplatte angeordnet ist.

2. Mückenabwehrventilator nach Anspruch 1, wobei eine Installationsnut in dem Gehäuse ausgebildet ist, die Installationsnut mit dem Installationsraum in Verbindung steht und die Tablette von der Installationsnut in den Installationsraum eingeschoben ist.

3. Mückenabwehrventilator nach Anspruch 1, wobei die Ventilatorbaugruppe Ventilatorblätter, einen Motor, ein Lager und einen Ventilatorblattträger umfasst, der Motor an einer Oberseite des Ventilatorblattträgers installiert ist, eine Verbindungsstange an einem hinteren Ende des Ventilatorblatts angeordnet ist, die mit dem Motor durch die Verbindungsstange verbunden ist, der Motor die Verbindungsstange antreibt und das Lager außen um die Verbindungsstange angeordnet ist.

4. Mückenabwehrventilator nach Anspruch 1, wobei die Anzeigeleuchte und die Taste auf der Leiterplatte angeordnet sind und die Anzeigeleuchte und die Taste der Luftaustrittsseite des Mückenabwehrventilators zugewandt angeordnet sind;
das Steuermodul ferner eine Tastenkappe umfasst, die auf einer Oberfläche der Taste angebracht ist, und die Tastenkappe und die Anzeigeleuchte durch eine Oberfläche des Gehäuses nach außen hindurchtreten;
eine Stromversorgungsschnittstelle ferner an einem Endteil einer Seite der Leiterplatte angeordnet ist und eine Stromversorgungsöffnung an der Stelle des Gehäuses, die der Stromversorgungsschnittstelle entspricht, ausgebildet ist und so konfiguriert ist, dass sie ein externes Kabel mit der Stromversorgungsöffnung verbindet;
die Stromversorgungsöffnung einer von USB-Schnittstellen von Typ-A, Mini-B, Micro-B und Typ-C ist.

5. Mückenabwehrventilator nach Anspruch 1, wobei eine Temperatur der Installationsplatte über mehrere Stufen verfügt und mehrere Anzeigeleuchten vorhanden sind, die jeweils jede Temperaturstufe der Installationsplatte und einen Schalter des Mückenabwehrventilators anzeigen.

6. Mückenabwehrventilator nach Anspruch 5, wobei die Arbeitstemperatur der Installationsplatte größer als 40 °C und weniger als 120 °C ist.

7. Mückenabwehrventilator nach Anspruch 1, wobei das Abwehrmittel ferner eines oder mehrere von BAAPE (Ethylbutylacetylaminopropionat), Methylnonylketon und DEET (N,N-Diethyl-3-methylbenzamid) umfasst.

## Revendications

1. Système répulsif, comprenant un ventilateur répulsif anti-moustiques et une tablette, le système répulsif comprenant en outre une coque et un ensemble ventilateur, dans lequel
l'ensemble ventilateur est installé dans la coque, une plaque d'installation est disposée derrière l'ensemble ventilateur, un espace d'installation est formé entre la plaque d'installation et l'ensemble ventilateur, et la tablette est installée de manière amovible dans l'espace d'installation ;
la tablette est constituée d'un matériau de base en paillettes imbibé d'un répulsif, dans lequel le répulsif comprend de la picaridine ;
une zone de maille est disposée au niveau d'une position correspondant à une direction de sortie d'air de l'ensemble ventilateur, sur la coque, et un écoulement d'air à partir de l'espace d'installation vers la zone de maille est généré lorsque l'ensemble ventilateur est mis en marche, afin de transporter un répulsif qui se volatilise à partir de l'espace d'installation hors de la zone de sortie de maille avec l'écoulement d'air ;
dans lequel le ventilateur répulsif anti-moustiques comprend en outre un module de commande, le module de commande comprend une carte de circuits imprimés, un voyant lumineux et une touche, et le module de commande est connecté électriquement à l'ensemble ventilateur ;
dans lequel la plaque d'installation a une fonction de chauffage, et une température de la plaque chauffante électrique est régulée et commandée par le module de commande ;
une vitesse d'air généré par l'ensemble ventilateur est régulée et commandée par le module de commande ;
dans lequel le ventilateur répulsif anti-moustiques comprend en outre un élément d'alimentation électrique disposé dans la coque, et l'élément d'alimentation électrique est situé sur le côté, à l'écart de l'ensemble ventilateur, de la plaque d'installation ;
l'élément d'alimentation électrique est connecté électriquement à l'ensemble ventilateur et au module de commande, et une plaque de séparation est alignée entre l'élément d'alimentation électrique et la plaque d'installation.

2. Ventilateur répulsif anti-moustiques selon la revendication 1, dans lequel une rainure d'installation est formée dans la coque, la rainure d'installation est en communication avec l'espace d'installation, et la tablette est insérée dans l'espace d'installation à partir de la rainure d'installation.

3. Ventilateur répulsif anti-moustiques selon la revendication 1, dans lequel l'ensemble ventilateur comprend des pales de ventilateur, un moteur, un palier et un support de pale de ventilateur, le moteur étant installé au niveau d'une partie supérieure du support de pale de ventilateur, une bielle est disposée au niveau de l'extrémité arrière de la pale de ventilateur qui est reliée au moteur par l'intermédiaire de la bielle, le moteur entraîne la bielle, et les manchons de palier se trouve à l'extérieur de la bielle.

4. Ventilateur répulsif anti-moustiques selon la revendication 1, dans lequel le voyant lumineux et la touche sont disposés sur la carte de circuits imprimés, et le voyant lumineux et la touche sont disposés en regard du côté sortie d'air du ventilateur répulsif anti-moustiques ;
le module de commande comprend en outre un dessus de touche installé sur une surface de la touche, et le dessus de touche et le voyant lumineux sortent hors d'une surface de la coque ;
une interface d'alimentation électrique est en outre disposée au niveau d'une partie d'extrémité d'un côté de la carte de circuits imprimés, et une ouverture d'alimentation électrique est formée dans la position, correspondant à l'interface d'alimentation électrique, de la coque et configurée pour connecter un fil externe à l'ouverture d'alimentation électrique ;
un type de l'ouverture d'alimentation électrique est l'un quelconque parmi des interfaces USB de type A, Mini-B, Micro-B et Type-C.

5. Ventilateur répulsif anti-moustiques selon la revendication 1, dans lequel une température de la plaque d'installation a une pluralité de positions, et une pluralité de voyants lumineux sont disponibles, qui indiquent respectivement chaque position de température de la plaque d'installation et un interrupteur du ventilateur répulsif anti-moustiques.

6. Ventilateur répulsif anti-moustiques selon la revendication 5, dans lequel la température de fonctionnement de la plaque d'installation est supérieure à 40 °C et inférieure à 120 °C.

7. Ventilateur répulsif anti-moustiques selon la revendication 1, dans lequel le répulsif comprend en outre l'un ou plusieurs parmi BAAPE (éthyl butylacétylaminopropionate), méthylnonylcétone et DEET (N,N-diéthyl-3-méthylbenzamide).
